# EUROPÄISCHE PATENTSCHRIFT

(11) **EP 3 518 360 B1**
(45) Veröffentlichungstag und Bekanntmachung des Hinweises auf die Patenterteilung: **12.08.2020**
(21) Anmeldenummer: 19152228.3
(22) Anmeldetag: 17.01.2019
(51) Int. Cl.: H02G 3/08, H02G 3/12, B29C 45/16, B29C 45/27

(54) **ALS HOHLWANDDOSE AUSGEFÜHRTE INSTALLATIONSDOSE**
INSTALLATION SOCKET IN FORM OF CAVITY WALL SOCKET
BOÎTE D'INSTALLATION CONÇUE SOUS FORME DE BOÎTIER POUR PAROIS CREUSES

(30) Priorität: 26.01.2018 DE 202018100433 U
(43) Veröffentlichungstag der Anmeldung: 31.07.2019
(73) Patentinhaber: OBO Bettermann Hungary Kft., 2347 Bugyi (HU)
(72) Erfinder: Faust, Fabian, 58706 Menden (DE); Harms, Heiko, 58708 Menden (DE); Ludwig, Henrik, 58706 Menden (DE)
(74) Vertreter: Haverkamp, Jens

(56) Entgegenhaltungen:
- EP-A1- 3 159 988
- EP-A2- 1 156 568
- EP-A2- 2 034 567
- DE-B3-102014 108 551
- DE-U1-202009 014 372

## Beschreibung

Die Erfindung betrifft eine Hohlwanddose für gebäudetechnische Installationen, insbesondere elektrische/elektronische Installationsgeräte mit einem durch einen Boden, eine umlaufende Wand und eine dem Boden gegenüberliegende Montageöffnung gebildeten Dosenkörper aus Kunststoff mit einem in radialer Richtung nach außen vorspringenden Stützflansch und mit Mitteln zum Befestigen der Hohlwanddose in einem Dosenloch.

Hohlwanddosen der in Rede stehenden Art sind Installationsdosen, die für elektrische Anwendungen bei der Installation von elektrischen und/oder elektronischen Geräten in Gebäuden eingesetzt werden. Derartige Hohlwanddosen verfügen über einen Dosenkörper, der durch einen Boden, eine umlaufende Wand und eine dem Boden gegenüberliegende Montageöffnung gebildet ist. Der Dosenkörper selbst dient zur Aufnahme von elektrischen/elektronischen Installationsgeräten, etwa Steckdosen, Geräteträger und dergleichen. An den Dosenkörper ist an seinem die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Die Hohlwanddose verfügt des Weiteren über Befestigungsmittel zum Befestigen dieser in einem solchen Dosenloch. Bei den Befestigungsmitteln kann es sich beispielsweise um in radialer Richtung ausstellbare Klemmkörper handeln, von denen jeder auf dem Gewindeschaft einer Stellschraube sitzt. Die Stellschraube ist in einem in den Dosenkörper integrierten, durch einen Schraubenkanalmantel eingefassten Schraubenkanal geführt. Zum Einschieben der Hohlwanddose in ein Dosenloch befindet sich jeder Klemmkörper in einer in die Außenwand des Dosenkörpers eingebrachten Klemmkörperaufnahme. Ist die Hohlwanddose mit ihrem Dosenkörper in ein Dosenloch eingesetzt, werden die Klemmkörper zum Hintergreifen der das Dosenloch einfassenden Wandabschnitte ausgeschwenkt. Durch Spannen der Stellschrauben wird die Hohlwanddose an diesem Wandabschnitt verklemmt, die sich sodann zwischen dem Stützflansch und den ausgeschwenkten Klemmkörpern befindet. Neben einer Aufnahme von elektrischen und/oder elektronischen Installationsgeräten sollen derartige Holwanddosen weiteren Anforderungen genügen. Durch den Einbau einer solchen Holwanddose soll, wenn möglich, die Schalldämmung der Trockenbauwand nur möglichst wenig beeinflusst werden. Dieses gilt vor allem bei Anwendungen, wenn Hohlwanddosen von gegenüberliegenden Wandseiten miteinander fluchtend verbaut werden. Wenn eine solche Hohlwanddose schalldämpfende bzw. Schall nicht weiterleitende Eigenschaften aufweisen soll, können diese, wie aus DE 20 2009 014 372 U1 bekannt, über einen den Innenraum auskleidenden oder an der Außenseite des Dosenkörpers befindlichen Elastomerkunststoffmantel einer gewissen Stärke verfügen. In einer anderen Ausgestaltung ist vorgesehen, dass der Boden der Hohlwanddose mit einem flexiblen Material beschichtet ist, wobei die nach außen weisende Fläche dieser Beschichtung abragende noppenartige Vorsprünge trägt. Eine solche Installationsdose ist aus DE 20 2017 101 772 U1 bekannt. Aus diesem Dokument ist eine weitere Ausgestaltung zur Schalldämpfung bekannt geworden, bei der die umlaufende Wand parallel zur Mittellängsachse des Dosenkörpers über einen Teil ihrer Länge verlaufenden Streifen aus einem flexiblen Material aufweist, wobei die Streifen über die Außenmantelfläche der Wand des Dosenkörpers vorragen. Durch diese Maßnahme wird eine Schallentkopplung zwischen dem aus Hartkunststoff gefertigten Dosenkörper und der das Dosenloch bereitstellenden Wand herbeigeführt. Ferner ist gewünscht, dass derartige Hohlwanddosen, wenn in eine Trockenbauwand eingesetzt, die durch die Wand bereitgestellte Winddichtigkeit ebenfalls nicht nachteilig beeinflussen. Mitunter ist bei einer solchen Hohlwanddose auch gefordert, dass im Falle eines Brandes eine Rauchdichtigkeit gegeben ist, um zu verhindern, dass über die Hohlwanddose Rauch in die Trockenbauwand und unter Umständen aus anderen Wandöffnungen wieder heraustritt. Derartige Hohlwanddosen verfügen, wenn für diesen Zweck ausgelegt, über Einsätze oder Ansätze aus intumeszierendem Material, sodass je nach Anwendung bei Wärmeentwicklung dieses außerhalb oder innerhalb des Dosenkörpers aufschäumt. Somit existieren im Stand der Technik für jede der genannten Anforderungen unterschiedlich ausgelegte Hohlwanddosen.

EP 3 159 988 A1 offenbart eine Elektroinstallationsdose für den Unterputzeinbau. Diese Installationsdose weist eine im Wesentlichen zylindrische Mantelfläche mit einem Bodenelement sowie einem Stützflansch auf der offenen Seite auf. Bei dieser Installationsdose sind in die Mantelfläche und die Bodenfläche weich-elastische Elemente eingesetzt, wobei diese die Mantelfläche in diesem Bereich ersetzt. Dadurch ist die Installationsdose in ihrer Längserstreckung dehn- bzw. stauchbar. Das weich-elastische Element ist mit seinem Außendurchmesser höchstens gleich groß wie die restliche Mantelfläche.

Eine weitere Elektroinstallationsdose dieser Art ist aus DE 10 2013 112 305 A1 bekannt. Bei dieser Installationsdose sind im Mantelbereich weich-elastische Dichtungsrippen vorgesehen, die die Installationsdose in der Wand fixieren sollen. Die Dichtungsrippen sind auf dem Material der Mantelfläche aufgesetzt.

DE 1 615 851 A1 offenbart einen topfartigen Einsatz für eine Installationsdose. Der Einsatz besteht aus einem plastischen Material, wobei dieses im Inneren der Installationsdose anliegt.

Aus EP 1 156 568 A2 ist eine Installationsdose mit einem Dosenkörper bekannt, welche Innenwandung des Dosenkörpers einen Angusskanal aufweist, der der axialen Erstreckung der Hohlwanddose folgt und der mit einer Weichkunststoffkomponente gefüllt ist. Diese Installationsdose zeichnet sich jedoch weder durch einen zufriedenstellende Schall- noch Winddichtigkeit aus.

Ferner ist aus DE 10 2014 108 551 B3 ein Brandschutz für eine Hohlwanddose bekannt, welcher einfach und auch nachträglich realisierbar ist. Bei diesem Brandschutz ist eine die seitliche Wandung und/oder den Boden der Hohlwanddose zumindest teilweise außen umschließende Brandschutzhülle aus einem flexiblen, im wesentlichen unelastischen, flächigen, nichtbrennbaren Träger vorgesehen, der zumindest an der der Hohlwanddose zugewandten Seite mit einem Dämmschichtbildner beschichtet ist. Der Außendurchmesser der Brandschutzhülle entspricht dabei dem Durchmesser eines Dosenloches.

Ausgehend von dem eingangs diskutierten Stand der Technik liegt der Erfindung daher die Aufgabe zugrunde, eine Hohlwanddose für den Einbau insbesondere elektrischer/elektronischer Installationsgeräte vorzuschlagen, die, ohne zusätzliche Maßnahmen ergreifen zu müssen, nicht nur einen wirksamen Schallschutz aufweist, sondern die ebenfalls zum Erzielen einer Winddichtigkeit geeignet ist.

Gelöst wird diese Aufgabe erfindungsgemäß durch eine eingangs genannte, gattungsgemäße Hohlwanddose, bei der der Dosenkörper an seiner äußeren Mantelfläche benachbart zu dem Stützflansch an seiner zu dem Boden weisenden Seite einen nach Art eines umlaufenden Bandes ausgeführten Ringkörper aus einem gegenüber dem Kunststoffmaterial des Dosenkörpers weicheren elastomeren Kunststoffmaterial trägt, dessen einhüllende zylindrische Mantelfläche einen größeren Durchmesser aufweist als die benachbarte Mantelfläche des Dosenkörpers, damit der Ringkörper, wenn in ein Dosenloch eingesetzt, an der Bohrlochwandung des Dosenloches anliegt, wobei der zumindest eine Ringkörper in einer umlaufenden, in die Wand des Dosenkörpers eingebrachten Nut sitzt.

Bei dieser Hohlwanddose trägt der Dosenkörper benachbart zu seinem Stützflansch an seiner zu dem Boden weisenden Seite zumindest einen umlaufenden Ringkörper. Dieser ist im Unterschied zu dem Material des Dosenkörpers aus einem elastomeren Kunststoff gefertigt. Dieser Ringkörper steht von der zylindrischen Mantelfläche des Dosenkörpers ab. Aufgrund seiner benachbarten Anordnung neben dem Stützflansch an seiner zum Boden des Dosenkörpers weisenden Seite liegt der Ringkörper, wenn in ein Dosenloch eingesetzt, an der Bohrlochwand des Dosenloches an. Da der Ringkörper aus einem elastomeren Kunststoff hergestellt ist, ist auf diese Weise eine wirksame Schallentkopplung zwischen dem Dosenkörper und der das Dosenloch bereitstellenden Wand hergestellt. Die umlaufende Auslegung des Ringkörpers, der auch aus mehreren Einzelsegmenten bereitgestellt sein kann, gewährleistet, dass die Schall- bzw. Schwingungsentkopplung zwischen dem Dosenkörper und der Wand tatsächlich gegeben ist, mithin der Dosenkörper an keiner Stelle an der Bohrlochwandung des Dosenloches anliegt.

In einer anderen Ausgestaltung ist vorgesehen, dass die Hohlwanddose ein Mehrkomponentenspritzgussteil ist und der Dosenkörper mit seinem Stützflansch aus einer härteren Kunststoffkomponente und der Ringkörper aus einer weicheren Kunststoffkomponente geformt sind. Bei einer solchen Ausgestaltung kann der Ringkörper auf der äußeren Mantelfläche der umlaufenden Wand des Dosenkörpers aufsitzen. Möglich ist es auch, den Ringkörper in einer in die Mantelfläche des Dosenkörpers eingebrachten Nut anzuordnen, wobei der Ringkörper in radialer Richtung aus der Nut herausragt. Der Ringkörper ist nach Art eines umlaufenden Bandes mit einer typischerweise rechteckförmigen Querschnittsgeometrie ausgeführt. Bei einer solchen Ausgestaltung können an der äußeren Mantelfläche des Ringkörpers Strukturen, wie beispielsweise umlaufende oder quer zur Umlaufsrichtung verlaufende Rippen, Noppen oder andere umlaufende Strukturen, durchaus auch Namenszüge angeformt sein.

Laut Erfindung wird man den Ringkörper umlaufend und somit nicht unterbrochen ausführen.

Durch den Ringkörper, der nach dem Einsetzen der Hohlwanddose an der Bohrlochwandung des Dosenloches anliegt, ist nicht nur eine Schallentkopplung und damit ein wirksamer Schallschutz bereitgestellt, sondern durch diese Maßnahme wird zugleich eine Winddichtigkeit zwischen dem Inneren der Hohlwand und dem Raum, in dessen Wand die Hohlwanddose eingesetzt ist, bereitgestellt. Auch stellt dieser Ringkörper eine Rauchsperre dar, da die bewirkte Winddichtigkeit zugleich ein Ein- oder Ausdringen von Rauch verhindert, zumindest jedoch behindert. Der benachbart zu dem Stützflansch angeordnete umlaufende Ringkörper sorgt bei der Montage der Hohlwanddose in das Dosenloch für einen sicheren, festen Sitz, was den Vorgang des Verspannens der Hohlwanddose an der das Dosenloch aufweisenden Wand erleichtert.
In einer Weiterbildung ist vorgesehen, dass sich der Ringkörper bis zu dem Stützflansch erstreckt und seine zu dem Boden des Dosenkörpers weisende Fläche bedeckt. Dann ist die Weichkunststoffkomponente ebenfalls in die Verspannung der Hohlwanddose an der Wand integriert, wodurch nicht nur eine Schallentkopplung, sondern auch die Wind- und Rauchdichtigkeit verbessert werden kann.

Bei einer als Mehrkomponentenspritzgussteil ausgelegten Hohlwanddose, bei der der zumindest eine Ringkörper ebenfalls in einem Werkzeug urgeformt wird, sind bei einem Ausführungsbeispiel die Angusskanäle für den Ringkörper in die Innenwand des Dosenkörpers eingebracht oder befinden sich außenseitig dazu. Diese Angusskanäle erstrecken sich in axialer Richtung der Hohlwanddose und somit in Richtung ihrer Tiefe. Der am Dosenkörper verbleibende Anguss zur Ausbildung des zumindest einen umlaufenden Ringkörpers liegt sodann zum Inneren des Dosenkörpers frei. In einer Ausgestaltung der Hohlwanddose ist vorgesehen, dass die Weichkunststoffkomponente intumeszierende Bestandteile enthält, die sich bei entsprechender Wärmeeinwirkung aufblähen. Derartige Partikel können ohne Weiteres mit der Weichkunststoffkomponente urgeformt werden. Bei einer solchen Ausgestaltung blähen unter entsprechender Wärmeeinwirkung der Ringkörper und die im Doseninneren freiliegenden Angüsse auf. Durch die im Doseninneren freiliegenden Angüsse schäumt das Innere des Dosenkörpers aus, wodurch eine Innenrauchabdichtung bereitgestellt ist. Durch Aufschäumen des Ringkörpers wird zudem die von dem Ringkörper ohnehin bereitgestellte Abdichtungswirkung nochmals verbessert. Somit kann allein durch Einsatz einer solchen Weichkunststoffkomponente eine wirksame Innen- und Außenabdichtung der Hohlwanddose gegenüber Rauch im Brandfalle bereitgestellt werden, ohne dass hierzu zusätzliche oder andere Werkzeuge für die Herstellung der Hohlwanddose eingesetzt werden müssten.

Die Zufuhr der Weichkunststoffkomponente bei der Herstellung der Hohlwanddose für die Ausbildung des zumindest einen Ringkörpers kann auch genutzt werden, um die die Klemmkörper tragenden Stellschrauben in ihren Schraubenkanälen gegenüber einem Herausfallen zu sichern, wenn deren Schraubenschaft noch nicht in die komplementären Innengewindebohrungen der Klemmkörper eingreift. Derartige Stellschrauben sind in einem Schraubenkanal als Teil des Dosenkörpers geführt, wobei ein solcher Schraubenkanal durch einen Schraubenkanalmantel bereitgestellt ist. Um einen wirksamen Herausfallschutz für eine solche Stellschraube bereitzustellen, ist in einen solchen Schraubenkanalmantel eine Durchbrechung zum Schraubenkanal hin vorgesehen, die mit der Weichkunststoffkomponente ausgefüllt ist, und zwar dergestalt, dass die Weichkunststoffkomponente in den Schraubenkanal hineinragt oder je nach Auslegung den Schraubenkanal quert. Ragt aus der Durchbrechung in den Schraubenkanal ein Endabschnitt dieser Weichkunststoffkomponente hinein, wirkt diese als Klemmglied auf den Schaft der Stellschraube. Aufgrund der weichen Eigenschaften kann die Stellschraube an diesem Klemmglied vorbeigeführt werden. Der Klemmschluss wird so eingerichtet, dass die Klemmkraft ausreicht, damit die Stellschraube nicht von selbst aus dem Schraubenkanal herausfallen kann. Wenn die Weichkunststoffkomponente den Schraubenkanal quert, beispielsweise als Teil des Angusses für die Herstellung des Ringkörpers, überspannt diese die Querschnittsfläche oder zumindest einen Teil der Querschnittsfläche des Schraubenkanals. Mittels der Stellschraube kann diese Weichkunststoffüberspannung durchstoßen werden. Die durch die Schraube sodann bei ihrem Durchstoß zur Seite gedrängten Weichkunststoffteile bilden einen wirksamen Herausfallschutz für die Stellschraube. Zugeführt wird die Weichkunststoffkomponente in eine solche Durchbrechung des Schraubenkanalmantels durch eine Verbindung der Durchbrechung zum Anguss bzw. einem Angusskanal. Die in dem Dosenkörper befindlichen Angusskanäle können in den Schraubenkanalmantel integriert sein. Bei einer solchen Ausgestaltung bedarf es somit im Boden eines solchen Angusskanals lediglich einer Durchbrechung zum Schraubenkanal hin, um elastomeres Kunststoffmaterial als Stellschraubenherausfallschutz in den Schraubenkanal einzubringen.

Eine Hohlwanddose der in Rede stehenden Art verfügt regelmäßig über Kabeleinführungen im Bereich des Bodens, der umlaufenden Wand und/oder einem geneigten Wandabschnitt, der einen Übergang von der umlaufenden Wand in den Boden darstellt. Derartige Kabeleinführungen können von einer Weichkunststoffkomponente überspannt sein. In anderen Ausgestaltungen ist der gesamte Bodenbereich einer solchen Hohlwanddose mit einer Weichkunststoffkomponente bedeckt. Bei einer solchen Hohlwanddose sind die Angusskanäle bzw. der in bzw. an der Hohlwanddose verbleibende Anguss zur Ausbildung des oder der Ringkörper typischerweise an die eine Kabeleinführung überdeckende Kunststoffkomponente angeschlossen. Sodann können alle Weichkunststoffbestandteile einer solchen Hohlwanddose in einem einzigen Spritzgussschritt erstellt werden.

Nachfolgend ist die Erfindung unter Bezugnahme auf die beigefügten Figuren beschrieben Es zeigen:
- **Fig. 1:**: Eine perspektivische Ansicht einer Hohlwanddose gemäß einem ersten Ausführungsbeispiel der Erfindung,
- **Fig. 2:**: die Hohlwanddose der Figur 1 in einer anderen perspektivischen Ansicht,
- **Fig. 3:**: einen Teillängsschnitt durch die Hohlwanddose der Figur 1 im Bereich eines Schraubenkanals ohne eingesetzte Stellschraube,
- **Fig. 4:**: die Darstellung der Figur 3 nach Einstecken einer Stellschraube,
- **Fig. 5:**: der in Figur 4 gezeigte Teillängsschnitt der Hohlwanddose der vorangegangenen Figuren, eingesetzt in ein in eine Wand eingebrachtes Dosenloch,
- **Fig. 6:**: eine Hohlwanddose in einer perspektivischen Ansicht gemäß einer weiteren Ausgestaltung,
- **Fig. 7:**: eine Hohlwanddose in einer perspektivischen Ansicht gemäß noch einer weiteren Ausgestaltung,
- **Fig. 8:**: eine Hohlwanddose in einer perspektivischen Ansicht gemäß noch einer weiteren Ausgestaltung,
- **Fig. 9:**: eine Hohlwanddose in einer perspektivischen Ansicht gemäß noch einer weiteren Ausgestaltung und
- **Fig. 10:**: einen Teillängsschnitt entsprechend demjenigen der Figur 3 durch eine weitere Hohlwanddose.

Eine Hohlwanddose 1 zur Aufnahme von elektrischen/elektronischen Installationsgeräten, wie etwa einer Steckdose, eines Geräteträgers oder dergleichen umfasst einen Dosenkörper 2. Bei dem dargestellten Ausführungsbeispiel wird der Dosenkörper 2 durch eine umlaufende Wand 3 und einen Boden 4 gebildet. Dem Boden 4 gegenüberliegend befindet sich eine Montageöffnung 5, durch die die gewünschte Installation in die Hohlwanddose 1 eingebracht werden kann. Die Montageöffnung 5 ist durch einen in den Figuren nicht dargestellten Deckel verschließbar. Zum Befestigen eines solchen Deckels dienen zwei Schrauben 6, 6.1, die mit ihrem Innengewinde jeweils ein komplementäres Innengewinde in einem Schraubenkanal kämmen, der durch jeweils einen Schraubenkanalmantel 7, 7.1 eingefasst ist. Anstelle eines Deckels kann an die Hohlwanddose 1 auch ein anderes Bauteil oder Gerät befestigt werden. An den Dosenkörper 2 ist, die Montageöffnung 5 einfassend, in radialer Richtung nach außen abragend ein Stützflansch 8 angeordnet. Der Dosenkörper 2, soweit vorstehend beschrieben, ist aus einem Hartkunststoff, typischerweise einem thermoplastischen Kunststoff hergestellt. Dieser stellt zugleich die notwendige elektrische Isolierung zwischen dem Innenraum des Dosenkörpers 2 und seiner Außenseite dar.

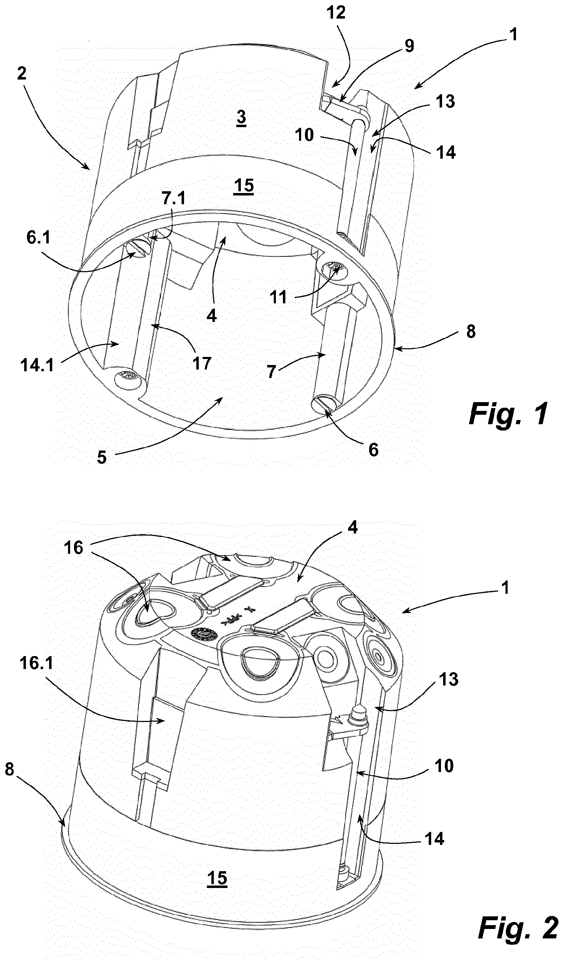

Zum Befestigen der Hohlwanddose 1 in einem Wandbauelement eingebrachten Dosenloch sind bei dem dargestellten Ausführungsbeispiel zwei einander der Längsachse bezüglich diametral gegenüberliegende Klemmkörper 9 vorgesehen, von denen aufgrund der gewählten Perspektive in Figur 1 nur ein Klemmkörper 9 erkennbar ist. Dieser befindet sich in der Darstellung der Figur 1 in seiner Nichtbenutzungsstellung. Der Klemmkörper 9 ist auf den Gewindeschaft 10 einer Stellschraube 11 aufgeschraubt und ist in seiner in der Figur gezeigten Nichtgebrauchsstellung in eine Klemmkörperaufnahme 12 der umlaufenden Wand 3 eingeschwenkt. Der Gewindeschaft 10 befindet sich in einem Schraubenkanal 13, der durch einen in das Innere des Dosenkörpers 3 vorspringenden Schraubenkanalmantel 14, 14.1 eingefasst ist. Derartige Befestigungsmittel zum Befestigen einer Hohlwanddose 1 in einem Dosenloch sind an sich bekannt.

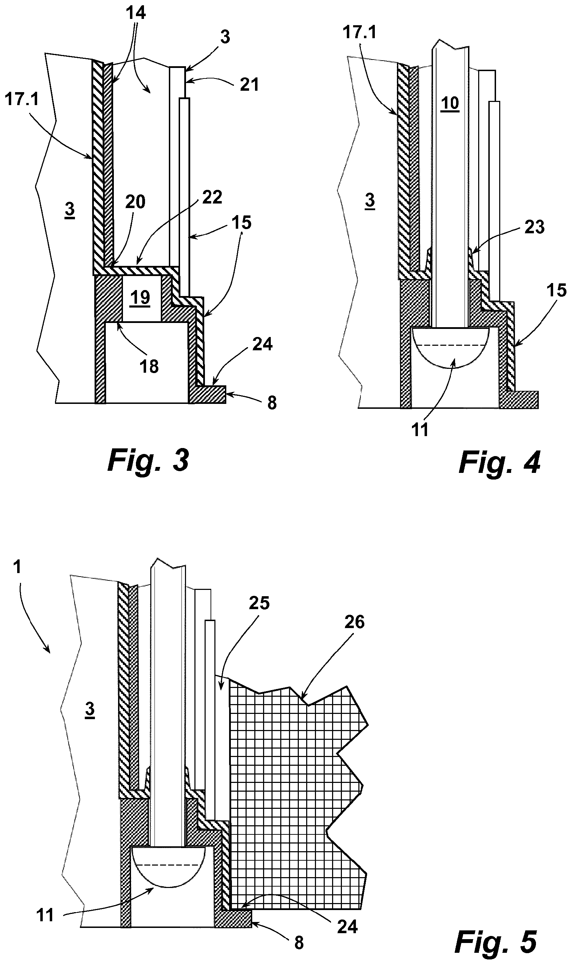

Die in Figur 1 gezeigte Hohlwanddose 1 trägt benachbart zu ihrem Stützflansch 8 einen nach Art eines Bandes mit rechteckförmiger Querschnittsgeometrie angeordneten Ringkörper 15. Der Ringkörper 15 ist aus einer elastomeren Kunststoffkomponente gefertigt. Mit seiner äußeren zylindrischen Mantelfläche, die bei dem in Figur 1 dargestellten Ausführungsbeispiel der Mantelfläche des Ringkörpers 15 entspricht, steht dieser gegenüber der Mantelfläche der umlaufenden Wand 3 vor (s. auch Figur 3).

Der Boden 4 der Hohlwanddose 1 (s. Figur 2) zeigt mehrere Kabeleinführungen, wie diese an sich bekannt sind. In Figur 2 sind einige Kabeleinführungen mit dem Bezugszeichen 16 kenntlich gemacht. Die Kabeleinführungen 16 sind von einer Haut aus elastomerem Weichkunststoff überspannt. Die Kabeleinführungen 16 erlauben ein Einführen von Kabeln oder Leerrohren an unterschiedlichen Stellen. Dort wo eine Kabeleinführung benötigt wird, wird die durch die Weichkunststoffkomponente gebildete Haut durchstoßen. Diese bildet dann zusammen mit dem eingeführten Kabel oder dem eingeführten Leerrohr zugleich eine Abdichtung. Die Hohlwanddose 1 verfügt des weiteren über zwei einander diametral gegenüberliegende Rohreinführungen 16.1, die ebenfalls durch die Weichkunststoffkomponente verschlossen sind.

Die Hohlwanddose 1 ist als Zweikomponentenspritzgussteil gefertigt. In einem ersten Schritt ist der aus Hartkunststoff bestehende Dosenkörper urgeformt worden. In einem zweiten Schritt ist die Weichkunststoffkomponente an den Dosenkörper 3 in einem entsprechenden Werkzeug angeformt worden. Über Angusskanäle steht der Ringkörper 15 mit der im Bereich des Bodens 4 bis in die umlaufende Wand hinein applizierten Weichkunststoffkomponente in Verbindung. Diese Wegsamkeit verbleibt nach Erkalten des Werkstückes als Anguss an bzw. in dem Dosenkörper 2. Dieses ist vorteilhaft, da die Angusskanäle zur Zufuhr der Weichkunststoffkomponente zur Ausbildung des Ringkörpers bzw. der nach der Herstellung der Hohlwanddose 1 diesbezüglich verbleibende Anguss für weitere Zwecke genutzt werden kann. Bei dem dargestellten Ausführungsbeispiel sind für die Zufuhr der Weichkunststoffkomponente in den Bereich des Ringkörpers 15 zwei in axialer Richtung des Dosenkörpers 3 verlaufende Angusskanäle vorgesehen. In Figur 1 kann an dem Schraubenkanalmantel 14.1 ein solcher Angusskanal durch die darin als Anguss 17 verbliebene Weichkunststoffkomponente erkannt werden (s. Figur 1). Dieser Anguss 17 setzt sich fort bis zu der im Bereich des Bodens 4 vorhandenen Weichkunststoffkomponente, mit der die Kabeleinführungen 16 überspannt sind.

Figur 3 zeigt eine Teillängsschnittdarstellung durch den den Schraubenkanal 13 einfassenden Schraubenkanalmantel 14 mit dem zum Dosenkörperinneren weisenden Anguss 17.1. Diese Schnittdarstellung lässt auch erkennen, dass zum Halten der Stellschraube 11 ein Boden 18 mit einem Schraubendurchgang 19 vorhanden ist. Bei dem dargestellten Ausführungsbeispiel verlaufen die Angüsse 17, 17.1 jeweils in einer der Längserstreckung des jeweiligen Schraubenkanalmantels 14, 14.1 folgenden Nut. In den Schraubenkanalmantel 14 ist benachbart zu dem Boden 19 eine Durchbrechung 20 eingebracht, um die Weichkunststoffkomponente von der Innenseite des Dosenkörpers auf seine Außenseite zu bringen, um dort den Ringkörper 15 auszubilden. In Figur 3 ist der Vorstand des Ringkörpers 15 gegenüber der Außenseite 21 der umlaufenden Wand 3 deutlich zu erkennen. Aufgrund der Krümmung der Hohlwanddose 1 in Umfangsrichtung und der Schnittebene in dem Schraubenkanal 13 ist scheinbar eine Stufe zwischen der Schnittebene und dem mit Abstand dazu in der Ansicht gezeigten Begrenzung des Schraubenkanals 13 zu vermuten. Dieses ist tatsächlich nicht der Fall. Der Dosenkörper 2 verläuft an dieser Stelle in einer Krümmung, wie aus den Figuren 1 und 2 deutlich erkennbar ist.

Der Anguss 17.1 durchgreift die in den Schraubenkanalmantel 14 eingebrachte Durchbrechung 20 und überspannt den Schraubendurchgang 19 mit einer Haut 22. Diese setzt sich in radialer Richtung nach außen hin in den Ringkörper 15 fort. Die Haut 22 dient als Herausfallschutz für eine durch den Schraubendurchgang 19 eingesteckte Schraube, die Stellschraube 11, wie aus Figur 4 ersichtlich. Mit dem Schraubenfuß wird die Haut 22 durchstoßen. Die aufgebrochenen Randbereiche 23 schmiegen sich an den Gewindeschaft 10 aufgrund ihrer elastomeren Eigenschaften an. Daher ist die Schraube 11 mit ihrem Schraubenschaft 10 gegen ein Herausfallen gesichert, sodass eine Montage des Klemmkörpers 9 auf dieser erleichtert ist. In einem in den Figuren nicht dargestellten Ausführungsbeispiel setzt sich der Ringkörper 15 in einen die zum Boden 4 weisende Fläche 24 des Stützflansches 8 bedeckenden Ringkörper fort.

Figur 5 zeigt die Hohlwanddose 1, eingesetzt in ein Dosenloch 25, welches in ein Wandbauelement 26 einer im Übrigen nicht näher dargestellten Hohlwand eingesetzt ist. Der Stützflansch 8 liegt mit seiner Fläche 24 an der Außenseite der Wand 26 an. Die Klemmkörper 9 sind ausgeschwenkt und hintergreifen die Wand 26 (nicht dargestellt). Durch Spannen der Stellschraube 11 ist die Hohlwanddose 1 an dem Wandbauelement 26 verspannt. Der Durchmesser des Dosenloches 25 und der Außendurchmesser der Hohlwanddose 1 mit ihrem Ringkörper 15 sind aufeinander abgestimmt. Bei dem dargestellten Ausführungsbeispiel ist der Durchmesser des Ringkörpers 15 wenige Zehntel Millimeter größer als der Innendurchmesser des Dosenloches 25. Ausgenutzt wird bei der Montage die nachgiebige Materialeigenschaft des Ringkörpers 15 ebenso wie die aus entformungstechnischen Gründen um wenige Winkelgrade zum Boden 4 hin geneigte Wand 3. Dieses erleichtert das Einführen. Die Hohlwanddose ist aufgrund der vorbeschriebenen Umstände mit einem leichten Presssitz in radialer Richtung in dem Dosenloch 25 gehalten. Hierdurch ist nicht nur eine Schallentkopplung zur Wand, sondern auch eine umlaufende Winddichtigkeit gegeben.

Bei dem dargestellten Ausführungsbeispiel enthält die Weichkunststoffkomponente zudem intumeszierende Bestandteile, die bei entsprechender Wärmeentwicklung aufblähen. Aus diesem Grunde sind die Angüsse 17, 17.1 zum Dosenkörperinneren hin freiliegend. Bei entsprechender Wärmeeinwirkung vermögen diese den Innenraum des Dosenkörpers 2 der Hohlwanddose 1 aufzuschäumen. In einem solchen Fall bläht auch der Ringkörper 15 auf und führt ergänzend zu der Innenrauchabdichtung durch das Aufschäumen der Angüsse 17, 17.1 zu einer wirksamen Außenabdichtung. Da sich diese Bestandteile ebenfalls im Bereich der Kabeleinführungen 16 befinden, erfolgt auch an dieser Stelle eine Aufschäumung, sodass wirksam eine Rauchsperre durch die Hohlwanddose 1 bereitgestellt ist.

Die vorstehend beschriebenen Merkmale der Hohlwanddose 1 in Bezug auf die Konzeption und Auslegung der Weichkunststoffkomponente können auch unabhängig voneinander Gegenstand einer Hohlwanddose sein.

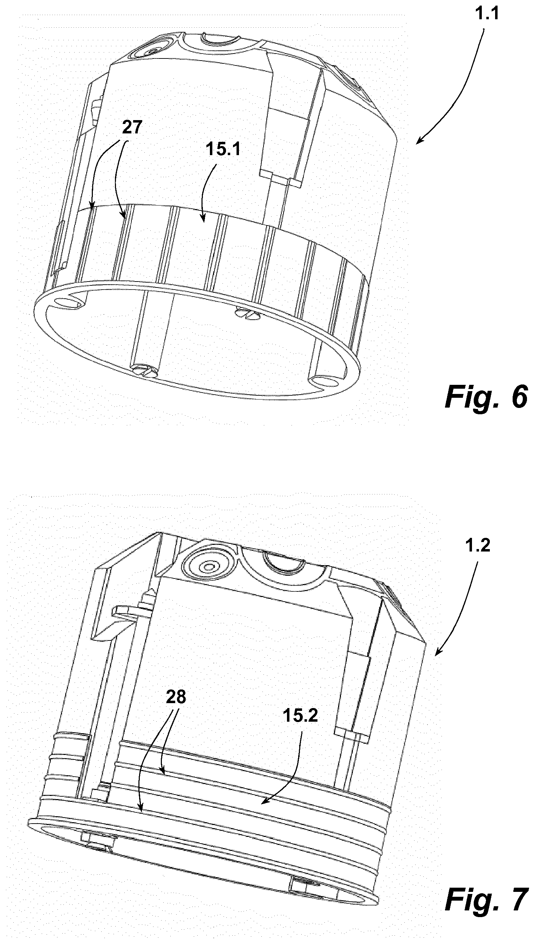

Figuren 6 bis 9 zeigen weitere Ausführungsbeispiele von Hohlwanddosen, die sich allein durch Auslegung ihres jeweiligen Ringkörpers unterscheiden. Somit gelten die vorstehenden Ausführungen zu der Hohlwanddose 1 gleichermaßen für die Hohlwanddosen der Figuren 6 bis 9.

Bei der Hohlwanddose 1.1 der Figur 6 sind an der Außenseite des Ringkörpers 15.1 in axialer Richtung verlaufende Rippen 27 geringer Höhe angeformt.

An den Ringkörper 15.2 der Hohlwanddose 1.2 der Figur 7 sind umlaufende Rippen 28 an der Außenseite des Ringkörpers 15 angeformt. Bei diesem Ausführungsbeispiel können die Rippen 28 durchaus auch als mehrere mit Abstand zueinander angeordnete einzelne Ringkörper der in Rede stehenden Art angesprochen werden.

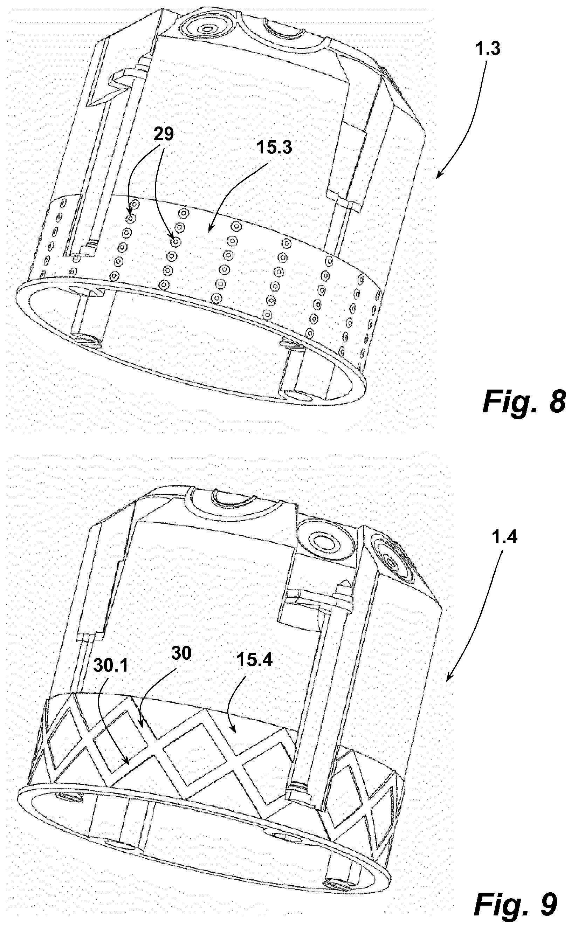

Bei dem Ausführungsbeispiel der Figur 8 verfügt die Hohlwanddose 1.3 über an die Außenseite ihres Ringkörpers 15.3 angeformte Noppen. Die Noppen sind in der Längserstreckung folgende Reihen gruppiert.

In dem Ausführungsbeispiel der Figur 9 ist die Außenseite des Ringkörpers 15.4 durch zwei gegeneinander verschobene Zickzack-Stege 30, 30.1 charakterisiert.

Bei den Ausführungsbeispielen der Figuren 6 bis 9 ist die die einzelnen Strukturen einfassende Mantelfläche des jeweiligen Ringkörpers 15.1-15.4 jeweils über der Mantelfläche der benachbarten umlaufenden Wand vorstehend, wie dieses zu dem Ringkörper 15 der Hohlwanddose 1 beschrieben ist.

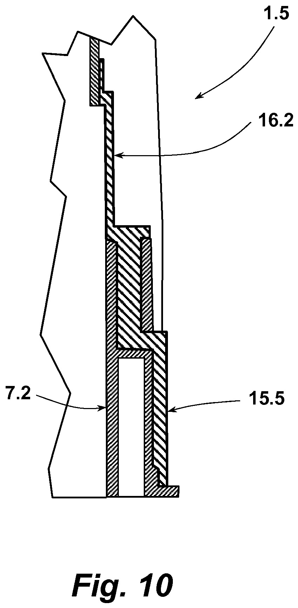

Figur 10 zeigt in einem Teillängsschnitt, der prinzipiell demjenigen der Figuren 3 bis 5 entspricht, jedoch in einer Hohlwanddose 1.5, die vom prinzipiellen Aufbau her derjenigen der Figuren 1 und 2 im Bereich des Schraubenkanalmantels 7 entspricht. Dieser Schraubenkanalmantel ist bei der Hohlwanddose 5.1 der Figur 10 mit dem Bezugszeichen 7.2 kenntlich gemacht. In den Schraubenkanalmantel 7.2 ist eine der Schraube 6 entsprechende Schraube nicht eingesetzt. In diesem Teillängsschnitt der Hohlwanddose 1.5 ist auch die Rohreinführung 16.2 im Schnitt gezeigt. Bei diesem Ausführungsbeispiel wird die Weichkunststoffkomponente zur Ausbildung des Ringkörpers 15.5 durch eine Verlängerung des Schraubenkanalmantels 7 in Verlängerung der die Rohreinführung 16.2 verschließenden Weichkunststoffkomponente zugeführt. Bei diesem Ausführungsbeispiel wird somit die Weichkunststoffkomponente im Unterschied zu dem Ausführungsbeispiel der Figuren 1 bis 5 an den Ringkörper 15.5 weder innenseitig offen noch außenseitig offen herangeführt.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen näher erläutert werden müsste.

### Bezugszeichenliste

- 1,1.1-1.5: Hohlwanddose
- 2: Dosenkörper
- 3: Wand
- 4: Boden
- 5: Montageöffnung
- 6,6.1: Schraube
- 7,7.1,7.2: Schraubenkanalmantel
- 8: Stützflansch
- 9: Klemmkörper
- 10: Gewindeschaft
- 11: Stellschraube
- 12: Klemmkörperaufnahme
- 13: Schraubenkanal
- 14, 14.1: Schraubenkanalmantel
- 15, 15.1-15.5: Ringkörper
- 16: Kabeleinführung
- 16.1, 16.2: Rohreinführung
- 17, 17.1: Anguss
- 18: Boden
- 19: Schraubendurchgang
- 20: Durchbrechung
- 21: Außenseite
- 22: Haut
- 23: Randbereich
- 24: Fläche
- 25: Dosenloch
- 26: Wandbauelement
- 27: Rippe
- 28: Rippe
- 29: Noppen
- 30, 30.1: Zickzack-Stege

## Patentansprüche

1. Hohlwanddose für gebäudetechnische Installationen, insbesondere elektrische/elektronische Installationsgeräte mit einem durch einen Boden (4), eine umlaufende Wand (3) und eine dem Boden (4) gegenüberliegende Montageöffnung (5) gebildeten Dosenkörper (2) aus Kunststoff mit einem in radialer Richtung nach außen vorspringenden Stützflansch (8) und mit Mitteln zum Befestigen der Hohlwanddose (1, 1.1-1.5) in einem Dosenloch (25), wobei der Dosenkörper (2) an seiner äußeren Mantelfläche benachbart zu dem Stützflansch (8) an seiner zu dem Boden (4) weisenden Seite einen Ringkörper (15, 15.1-15.5) aus einem gegenüber dem Kunststoffmaterial des Dosenkörpers (2) weicheren elastomeren Kunststoffmaterial trägt, dessen einhüllende zylindrische Mantelfläche einen größeren Durchmesser aufweist als die benachbarte Mantelfläche des Dosenkörpers (2), damit der Ringkörper (15, 15.1-15.5), wenn in ein Dosenloch (25) eingesetzt, an der Bohrlochwandung des Dosenloches (25) anliegt, **dadurch gekennzeichnet, dass** der Ringkörper (15, 15.1-15.5) nach Art eines umlaufenden Bandes mit einer rechteckförmigen Querschnittsgeometrie ausgeführt ist, wobei der zumindest eine Ringkörper (15, 15.1-15.5) in einer umlaufenden, in die Wand (3) des Dosenkörpers (2) eingebrachten Nut sitzt.

2. Hohlwanddose nach Anspruch 1, **dadurch gekennzeichnet, dass** diese ein Mehrkomponentenspritzgussteil ist und der zumindest einen Ringkörper (15, 15.1-15.5) durch eine Weichkunststoffkomponente gebildet ist.

3. Hohlwanddose nach Anspruch 2, **dadurch gekennzeichnet, dass** der Ringkörper (15, 15.1-15.5) umlaufend kontinuierlich ist.

4. Hohlwanddose nach Anspruch 1 oder 2, **dadurch gekennzeichnet, dass** der Dosenkörper (2) eine Innenwandung mit einem oder mehreren, der axialen Erstreckung der Hohlwanddose (1) folgenden, Angusskanäle für die Herstellung des zumindest einen Ringkörpers (15, 15.1-15.5) aus der Weichkunststoffkomponente füllenden Anguss (17, 17.1) aufweist.

5. Hohlwanddose nach Anspruch 4, **dadurch gekennzeichnet, dass** der Anguss (17, 17.1) bezüglich seiner Dicke zumindest teilweise in einer in die Innenwand des Dosenkörpers (2) eingebrachten Nut sitzt.

6. Hohlwanddose nach Anspruch 4 oder 5, **dadurch gekennzeichnet, dass** an dem Dosenkörper (2) innenseitig, seiner Längserstreckung folgend, mehrere, jeweils einen Schraubenkanal (13) einfassende Schraubenkanalmäntel (7, 7.1, 7.2, 14, 14.1) angeformt sind und dass die in das Innere des Dosenkörpers (2) weisende Mantelfläche zumindest eines Schraubenkanalmantels (14, 14.1) einen Anguss (17, 17.1) trägt.

7. Hohlwanddose nach einem der Ansprüche 4 bis 6, **dadurch gekennzeichnet, dass** die Weichkunststoffkomponente der Hohlwanddose (1, 1.1-1.5) intumeszierende Bestandteile enthält.

8. Hohlwanddose nach einem der Ansprüche 4 bis 7, **dadurch gekennzeichnet, dass** diese ein oder mehrere mit einer Weichkunststoffkomponente überspannte Kabeleinführungen (16) aufweist und der Anguss (17, 17.1) mit einer oder mehreren solcher, eine Kabeleinführung (16) überspannenden Weichkunststoffkomponenten verbunden ist.

9. Hohlwanddose nach einem der Ansprüche 2 bis 8, **dadurch gekennzeichnet, dass** an den Dosenkörper (2) innenseitig, seiner Längserstreckung folgend, zumindest ein einen innengewindelosen Schraubkanal einfassender Schraubenkanalmantel (14, 14.1) angeformt ist, dass dieser wenigstens eine Schraubenkanalmantel (14, 14.1) eine radiale, mit der Weichkunststoffkomponente gefüllte Durchbrechung (20) zum Schraubenkanal (13) hin aufweist und dass die Weichkunststoffkomponente zum Halten einer in den Schraubenkanal (13) eingesetzten Schraube (11) in diesen hineinragt.

10. Hohlwanddose nach Anspruch 9, **dadurch gekennzeichnet, dass** sich die durch die Durchbrechung (20) hindurcherstreckende Weichkunststoffkomponente als Fortsatz des Angusses (17, 17.1) über einen Schraubendurchgang (19) als Haut (22) erstreckt.

11. Hohlwanddose nach einem der Ansprüche 2 bis 10, **dadurch gekennzeichnet, dass** der aus der Weichkunststoffkomponente bestehende Ringkörper sich bis zu dem Stützflansch erstreckt und die Weichkunststoffkomponente die in Richtung zum Boden des Dosenkörpers weisende Stützflanschfläche bedeckt.

## Claims

1. Cavity wall socket for technical building installations, in particular electrical/electronic installation devices with a socket body (2) formed by a base (4), a circumferential wall (3), and an installation opening (5) opposite the base (4), made of plastic, with a support flange (8) projecting in a radial direction outwards, and with means for securing the cavity wall socket (1, 1.1-1.5) in a socket hole (25), wherein the socket body (2) carries on its outer casing surface, adjacent to the support flange (8), a ring-shaped body (15, 15.1-15.5) facing towards the base (4), made of an elastomer plastic material which is softer than the plastic material of the socket body (2), of which the encasing cylindrical casing surface exhibits a greater diameter than the adjacent casing surface of the socket body (2), such that the ring-shaped body (15, 15.1-15.5), when inserted into a socket cavity (25), comes in contact with the borehole wall of the socket cavity (25), **characterised in that** the ring-shaped body (15, 15.1-15.5) is configured in the manner of a circumferential strip with a rectangular cross-section geometry, wherein the at least one ring-shaped body (15, 15.1-15.5) is seated in a circumferential slot introduced into the wall (3) of the socket body (2).

2. Cavity wall socket according to claim 1, **characterised in that** this is a multi-component injection-moulded part, and the at least one ring-shaped body (15, 15.1-15.5) is formed by a soft plastic component.

3. Cavity wall socket according to claim 2, **characterised in that** the ring-shaped body (15, 15.1-15.5) rums continuously and circumferentially.

4. Cavity wall socket according to claim 1 or 2, **characterised in that** the socket body (2) comprises an inner wall with one or more sprue channels following the axial extension of the cavity wall socket (1), for the sprue (17, 17.1) deriving from the soft plastic components for the production of the at least one ring-shaped body (15, 15.1-15.5).

5. Cavity wall socket according to claim 4, **characterised in that** the sprue (17, 17.1) is seated, in respect of its thickness, at least partially in a slot introduced into the inner wall of the socket body (2).

6. Cavity wall socket according to claim 4 or 5, **characterised in that**, formed on the inside of the socket body (2), following its longitudinal extension, are several screw channel casings (7, 7.1, 7.2, 14, 14.1), each encompassing a screw channel (13), and that the casing surface pointing into the interior of the socket body (2) carries at least one sprue (17, 17.1) of at least one screw channel casing (14, 14.1).

7. Cavity wall socket according to any one of claims 4 to 6, **characterised in that** the soft plastic components of the cavity wall socket (1, 1.1-1.5) contain intumescing constituent parts.

8. Cavity wall socket according to any one of claims 4 to 7, **characterised in that** this comprises one or more cable inlets (16), spanned over which is a soft plastic component, and the sprue (17, 17.1) is connected to one or more of such soft plastic components spanning over a cable inlet (16).

9. Cavity wall socket according to any one of claims 2 to 8, **characterised in that**, formed on the inside of the socket body (2) and following its longitudinal extension, is at least one screw channel casing (14, 14.1), encompassing a screw channel without an inner thread, and that this at least one screw channel casing (14, 14.1) comprises a radial passage opening (20) to the screw channel (13), filled with the soft plastic component, and that, in order to hold a screw (11) inserted into the screw channel (13), the soft plastic component projects into the screw channel.

10. Cavity wall socket according to claim 9, **characterised in that** the soft plastic component extending through the passage opening (20), as an extension of the sprue (17, 17.1), extends as a skin over a screw passage opening (19).

11. Cavity wall socket according to any one of claims 2 to 10, **characterised in that** the ring-shaped body consisting of the soft plastic component extends as far as the support flange, and soft plastic component covers the support flange surface pointing in the direction of the base of the socket body.

## Revendications

1. Boîtier pour parois creuses destiné à des installations techniques de bâtiment, notamment des appareils d'installation électrique/électronique comportant un corps de boîtier (2) en plastique formé par un fond (4), une paroi périphérique (3) et une ouverture de montage à l'opposé du fond (4), avec une collerette d'appui (8) en saillie radiale vers l'extérieur et avec des moyens pour fixer le boîtier pour parois creuses (1, 1.1-1.5) dans un trou pour boîtier (25), le corps du boîtier (2) supportant sur sa surface d'enveloppe extérieure, au voisinage de la collerette d'appui (8) sur son côté orienté vers le fond (4), un corps annulaire (15, 15.1-15.5) en matière plastique élastomère plus molle que la matière plastique du corps de boîtier (2), dont la surface d'enveloppe cylindrique englobante présente un diamètre plus grand que la surface d'enveloppe voisine du corps du boîtier (2), de sorte que le corps annulaire (15, 15.1-15.5), s'il est engagé dans un trou pour boîtier (25), est en appui contre la paroi du trou pour boîtier (25) **caractérisé en ce que** le corps annulaire (15, 15.1-15-5) est conformé à la manière d'une bande périphérique avec une géométrie de section de forme rectangulaire, l'au moins un corps annulaire (15, 15.1-15.5) étant en assise sur une rainure périphérique aménagée dans la paroi (3) du corps du boîtier (2).

2. Boîtier pour parois creuses selon la revendication 1, **caractérisé en ce que** celui-ci est une pièce moulée par injection à composants multiples et que l'au moins un corps annulaire (15, 15.1-15-5) est formé par un composant en plastique mou.

3. Boîtier pour parois creuses selon la revendication 2, **caractérisé en ce que** le corps annulaire (15, 15.1-15.5) est périphérique de manière continue.

4. Boîtier pour parois creuses selon la revendication 1 ou 2, **caractérisé en ce que** le corps du boîtier (2) présente une paroi intérieure avec un ou plusieurs culots d'injection (17, 17.1) suivant l'étendue axiale du boîtier pour parois creuses (1) pour remplir des canaux d'injection destinés à la fabrication de l'au moins un corps annulaire (15, 15.1-15.5) en composants plastiques mous.

5. Boîtier pour parois creuses selon la revendication 4, **caractérisé en ce que** le culot d'injection (17, 17.1) est du moins partiellement en assise, par rapport à son épaisseur, dans une rainure aménagée dans la paroi intérieure du corps de boîtier (2).

6. Boîtier pour parois creuses selon la revendication 4 ou 5, **caractérisé en ce que** plusieurs enveloppes (7, 7.1, 7.2, 14, 14.1) de canal de vis enveloppant chacun un canal de vis (13) sont moulées sur le corps de boîtier (2), sur la face intérieure, en suivant son étendue longitudinale et **en ce que** la surface d'enveloppe orientée vers l'intérieur du corps du boîtier (2) de l'au moins une enveloppe (14, 14.1) de canal de vis supporte un culot d'injection (17, 17.1).

7. Boîtier pour parois creuses selon l'une des revendications 4 à 6, **caractérisé en ce que** le composant en plastique mou du boîtier pour parois creuses (1, 1.1-1.5) comporte des éléments intumescents.

8. Boîtier pour parois creuses selon l'une des revendications 4 à 7, **caractérisé en ce que** celui-ci présente une ou plusieurs introductions de câble (16) recouvertes par un composant en plastique mou et que le culot d'injection (17, 17.1) est relié à un ou plusieurs de tels composants en plastique mou qui recouvrent une introduction de câble (16).

9. Boîtier pour parois creuses selon l'une des revendications 2 à 8, **caractérisé en ce qu'**au moins une enveloppe (14, 14.1) de canal de vis enveloppant un canal de vissage dépourvu de filetage intérieur est moulée sur le corps de boîtier (2), sur la face intérieure, en suivant son étendue longitudinale et **en ce que** cette au moins une enveloppe (14, 14.1) de canal de vis présente, vers le canal de vis (13), un percement radial (20) rempli de composant en plastique mou et **en ce que** le composant en plastique mou s'engage, afin de maintenir une vis (11) placée dans le canal de vis (13), dans ce dernier.

10. Boîtier pour parois creuses selon la revendication 9, **caractérisé en ce que** le composant en plastique mou qui passe à travers le percement (20), s'étend en tant que prolongement du culot d'injection (17, 17.1) sur un passage de vis (19) comme une peau (22).

11. Boîtier pour parois creuses selon l'une des revendications 2 à 10, **caractérisé en ce que** le corps annulaire constitué de composant en plastique mou s'étend jusqu'à la collerette d'appui et que le composant en plastique mou recouvre la surface de collerette d'appui orientée vers le fond du corps de boîtier.
